# EUROPÄISCHE PATENTANMELDUNG

(11) **EP 1 895 634 A1**
(43) Veröffentlichungstag der Anmeldung: **05.03.2008**
(21) Anmeldenummer: 07008913.1
(22) Anmeldetag: 03.05.2007
(51) Int. Cl.: H02J 7/00

(54) **Akkupack für ein Elektrohandwerkzeuggerät**

(30) Priorität: 30.08.2006 DE 202006013336 U
(71) Anmelder: Metabowerke GmbH, 72602 Nürtingen (DE)
(72) Erfinder: Seyerle, Jörg, 73257 Köngen (DE)
(74) Vertreter: Dreiss, Fuhlendorf, Steimle & Becker

(57) **Zusammenfassung**

Die Erfindung betrifft einen Akkupack (6) für ein Elektrohandwerkzeuggerät, mit einem Schaft (12), mit welchem der Akkupack in einen Ladeschacht (4) eines Ladegeräts (2) und in eine Aufnahmeöffnung des Elektrohandwerkzeuggeräts einsteckbar ist, wobei an dem Schaft (12) elektrische Kontakte (16, 20) vorgesehen sind, die mit Akkuzellen (8) oder elektrischen Steuerkomponenten des Akkupacks elektrisch leitend verbunden sind; um eine falsche Verwendung weitgehend auszuschließen, wird vorgeschlagen, dass an einer in Einsteckrichtung vorderen Stirnseite (14) des Schafts (12) des Akkupacks (6) erste Kontakte (16) vorgesehen sind und dass an einer Umfangswandung (18) des Schafts (12) zweite Kontakte (20) vorgesehen sind, wobei die ersten Kontakte (16) der Kontaktierung des Akkupacks in der Aufnahmeöffnung des Elektrohandwerkzeugs und die zweiten Kontakte (20) der Kontaktierung des Akkupacks im Ladeschacht (4) des Ladegeräts (2) oder anders herum dienen.

## Beschreibung

Die Erfindung betrifft einen Akkupack für ein Elektrohandwerkzeuggerät mit einem Schaft, mit welchem der Akkupack in einen Ladeschacht eines Ladegeräts und in eine Aufnahmeöffnung des Elektrohandwerkzeuggeräts einsteckbar ist, wobei an dem Schaft elektrische Kontakte vorgesehen sind, die mit Akkuzellen oder elektrischen Steuerkomponenten des Akkupacks elektrisch leitend verbunden sind.

Akkupacks der vorgenannten Art sind vielfach bekannt geworden. Es gibt Akkupacks mit elektrischen Kontakten an der vorderen Stirnseite des Schafts und solche, bei denen die elektrischen Kontakte an einer Seitenwandung des Schafts vorgesehen sind.

Der vorliegenden Erfindung liegt die Aufgabe zugrunde, einen Akkupack für ein Elektrohandwerkzeuggerät zu schaffen, bei dem eine falsche Verwendung weitgehend ausgeschlossen ist.

Diese Aufgabe wird bei einem Akkupack der genannten Art erfindungsgemäß dadurch gelöst, dass an einer in Einsteckrichtung vorderen Stirnseite des Schafts des Akkupacks erste Kontakte vorgesehen sind und dass an einer Umfangswandung des Schafts zweite Kontakte vorgesehen sind, wobei die ersten Kontakte der Kontaktierung des Akkupacks in der Aufnahmeöffnung des Elektrohandwerkzeuggeräts und die zweiten Kontakte der Kontaktierung des Akkupacks im Ladeschacht des Ladegeräts oder anders herum dienen.

Dadurch, dass am Akkupack einerseits Kontakte vorgesehen werden, die nur im Betrieb mit dem Elektrohandwerkzeuggerät aktiv sind, und andererseits Kontakte vorgesehen werden, die nur im Ladebetrieb im Schacht eines Ladegeräts aktiv sind, lässt sich ein besserer Schutz gegen Fehlverwendung erzielen. Es lässt sich einerseits besser sicherstellen, dass der betreffende Akkupack vorzugsweise nur durch ein auf diesen Akkupack abgestimmtes Ladegerät geladen wird und andererseits kann durch noch weitere Freiheit in der Formgebung sichergestellt werden, dass der Akkupack nicht falsch herum, also verpolsicher, im Elektrohandwerkzeuggerät oder im Ladegerät eingesetzt wird.

Nach einer Weiterbildung dieses Erfindungsgedankens erweist es sich als vorteilhaft, wenn ein die ersten Kontakte umschließender Gehäuseteil des Schafts bezüglich einer Querschnittsform des Schafts senkrecht zur Einsteckrichtung des Schafts asymmetrisch angeordnet ist, so dass der Akkupack nur in einer Orientierung in den Ladeschacht des Ladegeräts oder in die Aufnahmeöffnung des Elektrohandwerkzeuggeräts einsteckbar ist. Hierdurch kann erreicht werden, dass durch die Anordnung und Ausbildung der ersten Kontakte bzw. eines diese Kontakte umschließenden Gehäuseteils des Schafts das Einsetzen des Akkupacks nur in einer Orientierung möglich ist, und zwar sowohl in den Ladeschacht des Ladegeräts als auch in die Aufnahmeöffnung des Elektrohandwerkzeuggeräts.

Nach einer weiteren zweckmäßigen Ausgestaltung der Erfindung erweist es sich als vorteilhaft, wenn die an der Umfangswandung vorgesehenen zweiten Kontakte mit den entsprechenden ersten Kontakten (jeweils + mit + bzw. - mit -) leitend verbunden sind. Die Kontaktzungen der ersten und zweiten Kontakte können auch einstückig ausgebildet sein. Gerade bei dieser Ausführungsform erweist es sich als vorteilhaft, wenn die ersten Kontakte verhältnismäßig nahe bei den zweiten Kontakten angeordnet sind.

Nach einem weiteren Erfindungsgedanken sind die zweiten Kontakte auf einander gegenüberliegenden Seiten des Schafts angeordnet.

Der Akkupack kann grundsätzlich beliebig ausgebildet sein und beispielsweise einen größeren Gehäusegrundkörper aufweisen, von dem sich ein Schaft wegerstreckt. Der Akkupack kann aber auch im Wesentlichen die Außenform des Schafts oder des schaftförmigen Abschnitts weiterführen oder aufweisen. Jedenfalls erweist es sich als vorteilhaft, wenn die zweiten Kontakte von einer die Umfangswandung des Schafts zumindest teilweise bildenden topfförmigen Gehäusekomponente begrenzt oder überfangen sind. Um eine definierte Position und Anordnung für die zweiten Kontakte zu gewährleisten, erweist es sich als vorteilhaft, wenn die genannte topfförmige Gehäusekomponente im Wesentlichen starr ausgebildet ist.

Insbesondere dann, wenn das Gehäuse des Akkupacks eine der Form des Schafts entsprechende Grundgeometrie aufweist, kann es sich als vorteilhaft erweisen, wenn der Akkupack zwei, insbesondere in Einsteckrichtung des Akkupacks miteinander fügbare Gehäusekomponenten umfasst, von denen die eine beispielsweise topfförmig ausgebildet sein kann.

Hierbei erweist es sich weiter als vorteilhaft, wenn die eine Gehäusekomponente die eine Stirnseite und die andere Gehäusekomponente eine der ersten gegenüberliegende Stirnseite des Akkupacks bildet.
Nach einem weiteren Erfindungsgedanken umfas-st eine Gehäusekomponente des Akkupacks, insbesondere die in Einsteckrichtung hintere Gehäusekomponente, Ver- bzw. Entriegelungsmittel, um den Akkupack am Elektrohandwerkzeuggerät und/oder am Ladegerät verliersicher zu halten.

Diese Ver- bzw. Entriegelungsmittel können beispielsweise einstückig mit der betreffenden Gehäusekomponente ausgebildet sein. Sie können in Verriegelungsstellung vorgespannte manuell auslenkbare Rastmittel umfassen.

Um den Bauraum für den Akkupack so gut wie möglich auszunutzen, erweist es sich als vorteilhaft, wenn die eine Gehäusekomponente im Bereich der Ver- bzw. Entriegelungsmittel der anderen Gehäusekomponente eine Ausnehmung oder Zurücksetzung aufweist.

Des Weiteren wird einer Ausführungsform der Vorzug gegeben, bei der die Ver- bzw. Entriegelungsmittel an denjenigen Flachseiten des Schafts angeordnet sind, an denen keine zweiten Kontakte angeordnet sind.

Des Weiteren betrifft die Erfindung eine Kombination aus einem Ladegerät und einem erfindungsgemäß ausgebildeten Akkupack mit den Merkmalen des Anspruchs 15 bzw. mit den Merkmalen des Anspruchs 16.

Weitere Merkmale, Einzelheiten und Vorteile der Erfindung ergeben sich aus den beigefügten Schutzansprüchen und aus der zeichnerischen Darstellung und nachfolgenden Beschreibung einer bevorzugten Ausführungsform des erfindungsgemäßen Akkupacks und eines entsprechend ausgebildeten erfindungsgemäße Ladegeräts.

In der Zeichnung zeigt:
- Figur 1: eine Draufsicht auf ein Ladegerät in Einsteckrichtung eines Akkupacks betrachtet;
- Figur 2: eine Seitenansicht eines erfindungsgemäßen Akkupacks;
- Figur 3: eine Draufsicht auf die in Einsteckrichtung vordere Stirnseite des Akkupacks nach Figur 2;
- Figur 4: eine Ansicht des Akkupacks nach Figur 2 gesehen in Richtung des Pfeils IV;
- Figur 5: eine perspektivische Ansicht des Akkupacks nach Figur 2 mit einer weggelassenen topfförmigen Gehäusekomponente;
- Figuren 6 und 7: zwei Ansichten einer in Einsteckrichtung hinteren Gehäusekomponente und
- Figur 8: eine perspektivische Ansicht des Akkupacks nach Figur 2.

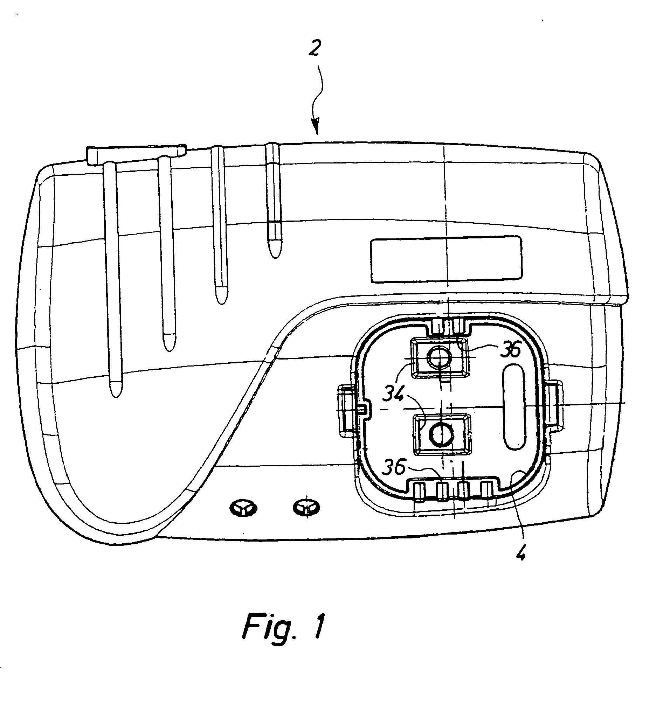

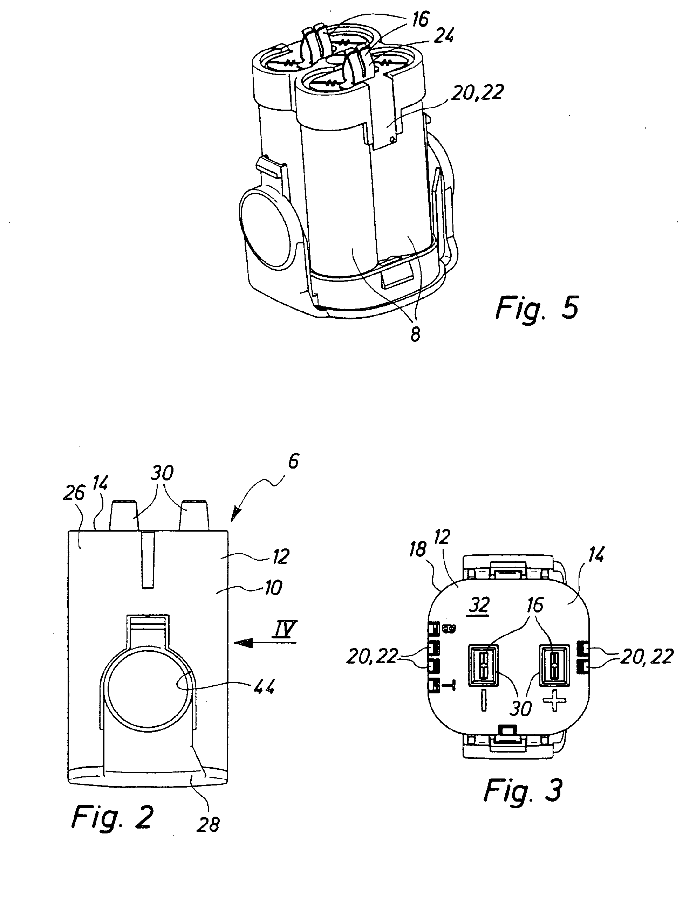

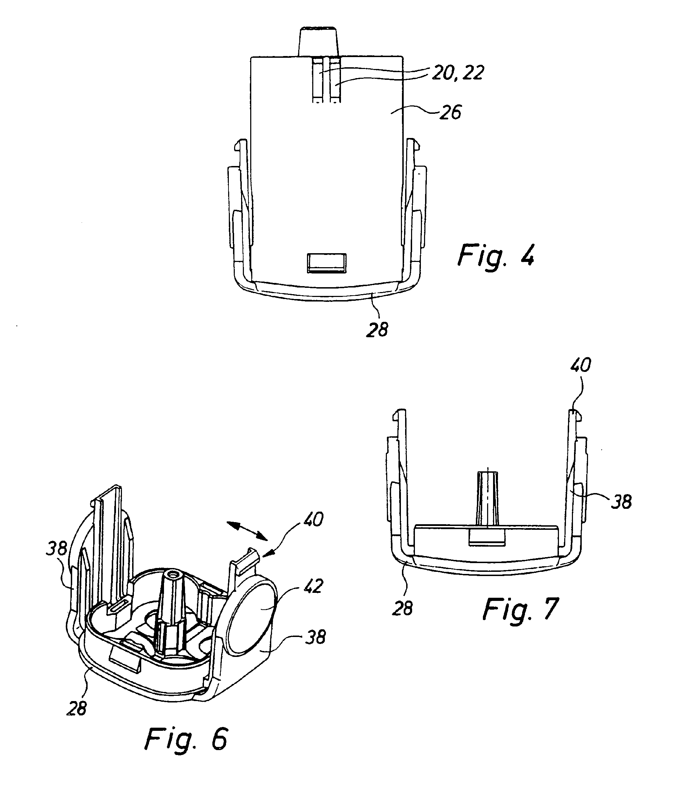

Figur 1 zeigt ein insgesamt mit dem Bezugszeichen 2 bezeichnetes Ladegerät mit einem Ladeschacht 4 für einen Akkupack 6, der in den Figuren 2 bis 8 dargestellt ist. Der Akkupack 6 umfasst aus Figur 4 ersichtliche Akkuzellen 8, die in einem Gehäuse 10 des Akkupacks aufgenommen sind. Das Gehäuse 10 bildet zugleich einen Schaft 12, mit dem der Akkupack 6 in den Ladeschacht 4 des Ladegeräts 2 und in eine Aufnahmeöffnung eines nicht dargestellten Elektrohandwerkzeuggeräts einsetzbar ist.
Man erkennt im Bereich einer in Einsteckrichtung vorderen Stirnseite 14 des Akkupacks 6 erste elektrische Kontakte 16 und an einer Umfangswandung 18 des Schafts 12 zweite elektrische Kontakte 20. Die ersten Kontakte 16 sind bei der Leistungsversorgung des Elektrohandwerkzeuggeräts aktiv, während die zweiten Kontakte 20 beim Laden der Akkuzellen 8 im eingesteckten Zustand in den Ladeschacht 4 des Ladegeräts 2 aktiv sind. Wie aus Figur 4 ersichtlich ist, sind die Kontaktzungen 22 der zweiten Kontakte 20 einstückig mit Kontaktzungen 24 der ersten Kontakte 16 ausgebildet (jeweils + mit + und - mit -).

Das Gehäuse 10 des Akkupacks 6 umfasst zwei Gehäusekomponenten, nämlich eine in Einsteckrichtung vordere Gehäusekomponente 26, die im Wesentlichen topfförmig ausgebildet ist, und eine in Einsteckrichtung hintere Gehäusekomponente 28, die im Einzelnen in Figuren 6 und 7 dargestellt ist. Die beiden Gehäusekomponenten sind in Einsteckrichtung des Akkupacks fügbar und für den Endverbraucher vorzugsweise unlösbar miteinander verrastet, insbesondere verklebt und/oder verschweißt. Die Komponenten sind vorzugsweise nicht voneinander trennbar. Man erkennt, dass ein Gehäuseteil 30 der ersten Gehäusekomponente 26 jeweils in Form einer domförmigen Erhebung von der Stirnseite 14 jeweils die ersten Kontakte 16 umgibt. Dieser Gehäuseteil 30 bzw. die domförmigen Erhebungen sind bezüglich einer Querschnittsform 32 des Schafts 12 asymmetrisch angeordnet (Figur 3), so dass der Akkupack 6 nur in einer Orientierung in den Ladeschacht 4 und in eine Aufnahmeöffnung in dem Elektrohandwerkzeuggerät eingesetzt werden kann. Am Grund des Ladeschafts 4 sind entsprechende Vertiefungen 34 angeordnet. Nur wenn der Akkupack 6 in der richtigen Orientierung eingesteckt wird, können die domförmigen Erhebungen in die Vertiefungen 34 gelangen und in der Folge eine Kontaktierung der zweiten Kontakte 22 mit Ladekontakten 36 des Ladegeräts 2 bewirken.

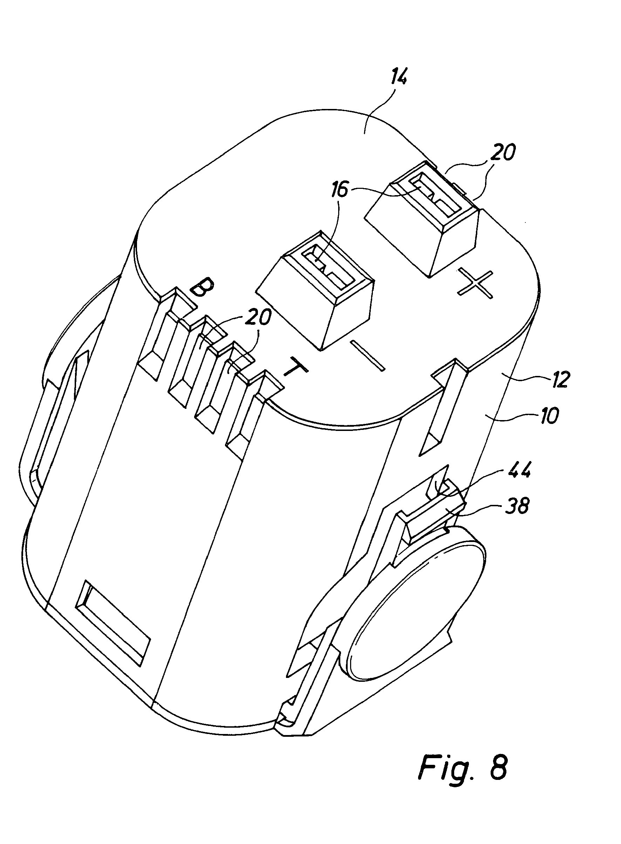

Die in Einsteckrichtung hintere Gehäusekomponente 28 umfasst des Weiteren Ver- bzw. Entriegelungsmittel 38, die insbesondere einstückig mit der Gehäusekomponente 28 ausgebildet sind. Diese Ver- bzw. Entriegelungsmittel 38 sind im dargestellten Fall als in Verriegelungsstellung vorgespannte manuell auslenkbare Rastmittel 40 ausgebildet. Sie umfassen eine manuell drückbare Betätigungsfläche 42. Vorzugsweise sind zwei solcher Ent-/Verriegelungsmittel 38 vorgesehen. Wie aus Figuren 2 und 8 am besten ersichtlich ist, weist die andere topfförmige Gehäusekomponente 26 im Bereich der Ent-/Verriegelungsmittel 38 eine hierzu komplementäre Ausnehmung 44 oder Zurücksetzung auf, in welche das
Ent-/Verriegelungsmittel 38 durch manuellen Druck hineinverdrängbar ist, um in Freigabestellung zu gelangen.

## Patentansprüche

1. Akkupack (6) für ein Elektrohandwerkzeuggerät, mit einem Schaft (12), mit welchem der Akkupack in einen Ladeschacht (4) eines Ladegeräts (2) und in eine Aufnahmeöffnung des Elektrohandwerkzeuggeräts einsteckbar ist, wobei an dem Schaft (12) elektrische Kontakte (16, 20) vorgesehen sind, die mit Akkuzellen (8) oder elektrischen Steuerkomponenten des Akkupacks elektrisch leitend verbunden sind, **dadurch gekennzeichnet, dass** an einer in Einsteckrichtung vorderen Stirnseite (14) des Schafts (12) des Akkupacks (6) erste Kontakte (16) vorgesehen sind und dass an einer Umfangswandung (18) des Schafts (12) zweite Kontakte (20) vorgesehen sind, wobei die ersten Kontakte (16) der Kontaktierung des Akkupacks in der Aufnahmeöffnung des Elektrohandwerkzeugs und die zweiten Kontakte (20) der Kontaktierung des Akkupacks im Ladeschacht (4) des Ladegeräts (2) oder anders herum dienen.

2. Akkupack nach Anspruch 1, **dadurch gekennzeichnet, dass** ein die ersten Kontakte (16) umschließender Gehäuseteil (30) des Schafts (12) bezüglich einer Querschnittsform (32) des Schafts (12) senkrecht zur Einsteckrichtung des Schafts asymmetrisch angeordnet ist, so dass der Akkupack (6) nur in einer Orientierung in den Ladeschacht (4) des Ladegeräts oder in die Aufnahmeöffnung des Elektrohandwerkzeugsgeräts einsteckbar ist.

3. Akkupack nach Anspruch 1 oder 2, **dadurch gekennzeichnet, dass** die an der Umfangswandung (18) vorgesehenen zweiten Kontakte (20) mit den entsprechenden ersten Kontakten (16) leitend verbunden sind.

4. Akkupack nach Anspruch 3, **dadurch gekennzeichnet, dass** die Kontaktzungen (24, 22) der ersten und zweiten Kontakte (16, 20) (jeweils + bzw. -) einstückig ausgebildet sind.

5. Akkupack nach einem oder mehreren der vorstehenden Ansprüche, **dadurch gekennzeichnet, dass** die zweiten Kontakte (20) auf einander gegenüberliegenden Seiten des Schafts (12) angeordnet sind.

6. Akkupack nach einem oder mehreren der vorstehenden Ansprüche, **dadurch gekennzeichnet, dass** die zweiten Kontakte (20) von einer die Umfangswandung (18) des Schafts (12) zumindest teilweise bildenden topfförmigen Gehäusekomponente (26) begrenzt oder überfangen sind.

7. Akkupack nach Anspruch 6, **dadurch gekennzeichnet, dass** die topfförmige Gehäusekomponente (26) im wesentlichen starr ausgebildet ist.

8. Akkupack nach einem oder mehreren der vorstehenden Ansprüche, **dadurch gekennzeichnet, dass** er zwei, insbesondere in Einsteckrichtung des Akkupacks miteinander fügbare Gehäusekomponenten (26, 28) umfasst.

9. Akkupack nach Anspruch 8, **dadurch gekennzeichnet, dass** die eine Gehäusekomponente (26) die eine Stirnseite (14) und die andere Gehäusekomponente (28) eine der ersten gegenüberliegende Stirnseite des Akkupacks bildet.

10. Akkupack nach einem oder mehreren der vorstehenden Ansprüche, **dadurch gekennzeichnet, dass** eine Gehäusekomponente (26) des Akkupacks, insbesondere die in Einsteckrichtung hintere Gehäusekomponente (26), Ver- bzw. Entriegelungsmittel (38) umfasst, um den Akkupack am Elektrohandwerkzeuggerät und/oder am Ladegerät verliersicher zu halten.

11. Akkupack nach Anspruch 10, **dadurch gekennzeichnet, dass** die Ver- bzw. Entriegelungsmittel (38) einstückig mit der Gehäusekomponente (28) ausgebildet sind.

12. Akkupack nach Anspruch 10 oder 11, **dadurch gekennzeichnet, dass** die Ver- bzw. Entriegelungsmittel (38) in Verriegelungsstellung vorgespannte manuell auslenkbare Rastmittel (40) umfassen.

13. Akkupack nach Anspruch 10, 11 oder 12, **dadurch gekennzeichnet, dass** die eine Gehäusekomponente (26) im Bereich der Ver- bzw. Entriegelungsmittel (38) der anderen Gehäusekomponente (28) eine Ausnehmung (42) oder Zurücksetzung aufweist.

14. Akkupack nach einem Ansprüche 10 - 13, **dadurch gekennzeichnet, dass** die Ver- bzw. Entriegelungsmittel (38) an denjenigen Flachseiten des Schafts (12) angeordnet sind, an denen keine zweiten Kontakte (20) angeordnet sind.

15. Ladegerät (2) und Akkupack (6) nach einem oder mehreren der vorstehenden Ansprüche, **dadurch gekennzeichnet, dass** das Ladegerät (2) an mit den ersten und zweiten Kontakten (16, 20) des Akkupacks (6) entsprechenden Stellen am Grund des Ladeschachts (4) eine Vertiefung und an einer Seitenwandung des Ladeschachts (4) Ladekontakte (32) aufweist.

16. Ladegerät und Akkupack nach Anspruch 15, **dadurch gekennzeichnet, dass** die Vertiefung am Grund des Ladeschachts (4) zur Fläche des Grunds asymmetrisch angeordnet ist.
